(19) Europäisches Patentamt
European Patent Office
Office européen des brevets

(11) Veröffentlichungsnummer: **0 220 507**
**B1**

# (12) EUROPÄISCHE PATENTSCHRIFT

(45) Veroffentlichungstag der Patentschrift: 19.04.89

(51) Int. Cl.⁴: **C08F 8/14**, G03C 1/00

(21) Anmeldenummer: 86113253.8

(22) Anmeldetag: 26.09.86

ERRATUM

| DIE TEXTSTELLE:<br>TEXT PUBLISHED:<br>LE PASSAGE SUIVANT: | (SEITE, SPALTE, ZEILE)<br>(PAGE, COLUMN, LINE)<br>(PAGE, COLONNE, LIGNE) | | | LAUTET BERICHTIGT:<br>SHOULD READ:<br>DEVRAIT ETRE LU: |
|---|---|---|---|---|
| 1-Hydroxy-ethyliden-1,2- | 2 | 2 | 29 | 1-Hydroxy-ethylen-1,2- |
| an 1-Oxapropyliden-1,3-, | 2 | 2 | 49 | an 1-Oxapropylen-1,3-, |
| an 1-Acetyl-ethyliden-1,2- | 2 | 2 | 51 | an 1-Acetyl-ethylen-1,2- |
| an 1-Hydroxy-ethyliden-1,2- | 2 | 2 | 60 | an 1-Hydroxy-ethylen-1,2- |
| 1-Oxapropyliden-1,3-, | 3 | 4 | 39/40 | 1-Oxapropylen-1,3-, |
| 1-Hydroxy-ethyliden-1,2- | 3 | 4 | 41 | 1-Hydroxy-ethylen-1,2- |
| 1-Oxapropyliden-1,3- | 3 | 4 | 60/61 | 1-Oxapropylen-1,3- |
| 1-Acetyl-ethyliden-1,2- | 3 | 4 | 61 | 1-Acetyl-ethylen-1,2- |
| 1-Hydroxyethyliden-1,2- | 3 | 4 | 62 | 1-Hydroxyethylen-1,2- |

Tag der Entscheidung über die Berichtigung / Date of decision on rectification / Date de décision portant sur modification: 24.08.89

Ausgabe- und Veröffentlichungstag / Issue and publication date / Date d'edition et de publication: 18.10.89

Patbl.Nr / EPB no / Bull. no: 89/42

(19) Europäisches Patentamt
European Patent Office
Office européen des brevets

(11) Veröffentlichungsnummer: **0 220 507**
**B1**

(12) **EUROPÄISCHE PATENTSCHRIFT**

(45) Veröffentlichungstag der Patentschrift: **19.04.89**

(51) Int. Cl.⁴: **C08F 8/14**, G03C 1/00

(21) Anmeldenummer: **86113253.8**

(22) Anmeldetag: **26.09.86**

(54) **Verfahren zur Herstellung von Carbonsäureestern hydroxygruppenhaltiger Polymerisate.**

(30) Priorität: **27.09.85 DE 3534476**

(43) Veröffentlichungstag der Anmeldung:
**06.05.87 Patentblatt 87/19**

(45) Bekanntmachung des Hinweises auf die Patenterteilung:
**19.04.89 Patentblatt 89/16**

(84) Benannte Vertragsstaaten:
**CH DE FR GB IT LI NL**

(56) Entgegenhaltungen:
**EP-A- 0 079 514**
**EP-A- 0 129 902**
**DE-A- 2 012 389**
**DE-A- 2 632 398**

(73) Patentinhaber: **BASF Aktiengesellschaft,**
**Carl-Bosch-Strasse 38, D-6700 Ludwigshafen(DE)**

(72) Erfinder: **Schornick, Gunnar, Dr.,**
**Konrad-Adenauer-Strasse 8, D-6719 Neuleiningen(DE)**
Erfinder: **Schulz, Guenther, Dr., Wasgaustrasse 24,**
**D-6700 Ludwigshafen(DE)**
Erfinder: **Mann, Walter, Kaethe-Kollwitz-Strasse 4a,**
**D-6710 Frankenthal(DE)**

**EP 0 220 507 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein verbessertes Verfahren zur Herstellung von Carbonsäureestern hydroxygruppenhaltiger Polymerisate. Insbesondere betrifft die Erfindung ein verbessertes Verfahren zur Herstellung von Alkensäureestern partiell oder vollständig hydrolysierter Polyvinylalkoholalkylester und partiell oder vollständig hydrolysierter Alkylenoxid-Vinylalkoholalkylester-Pfropfcopolymerisate.

Für partiell oder vollständig hydrolysierte Homo- und Copolymerisate von Vinylalkoholalkylestern sowie für Pfropfcopolymerisate auf der Basis dieser Polymerisate hat sich die Bezeichnung "Polyvinylalkohol" eingebürgert. Im folgenden wird diese Bezeichnung – wenn sie auch nicht ganz korrekt ist – der Kürze halber verwendet.

Das eingangs beschriebene Verfahren, bei dem man Carbonsäureanhydride mit Polyvinylalkoholen in Gegenwart eines tertiären Amins umsetzt, ist, sieht man von der erfindungsgemäßen Verbesserung ab, aus DE-A 3 322 993 bekannt. Als Veresterungskatalysatoren wurden hierbei p-N,N-Dialkylaminopyridine verwendet. Aus R.P. Krüger und R. Gnauck, Plaste und Kautschuk, Band 28, Seite 206, 1981, ist es ferner bekannt, bei der Bestimmung der Hydroxyendgruppen von di- und trifunktionellen Polyetheralkoholen durch Acetylierung mit einem sehr hohen Überschuß an Essigsäureanhydrid in homogener Lösung N-Methylimidazol als Katalysator anzuwenden.

Das herkömmliche Verfahren hat den Nachteil, daß höher veresterte Produkte stark gefärbt sind und sich deshalb für ihr Hauptanwendungsgebiet – der Herstellung von durch Photopolymerisation vernetzbaren Materialien – schlecht eignen.

Der Erfindung lag die Aufgabe zugrunde, das vorbekannte Veresterungsverfahren zu verbessern und den damit verbundenen geschilderten Nachteil zu beheben.

Demgemäß wurde ein Verfahren zur Herstellung von Carbonsäureestern hydroxygruppenhaltiger Polymerisate durch Umsetzung von feinteilig dispergierten hydroxygruppenhaltigen Polymerisaten mit Carbonsäureanhydriden in heterogener Phase in Gegenwart eines tertiären Amins als Katalysator gefunden, welches dadurch gekennzeichnet ist, daß man hierzu ein Imidazol der Formel (I),

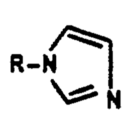

(I)

in der R einen Alkylrest mit 1 bis 10 C-Atomen bedeutet, als Katalysator verwendet.

Erfindungsgemäß anzuwendende Imidazole sind z.B. N-Methyl-, N-Ethyl-, N-n-Propyl, N-i-Propyl, N-n-Butyl-, N-tert.-Butyl-, N-2-Butyl-, N-n-Pentyl-, N-n-Hexyl-, N-n-Heptyl-, N-n-Octyl-, N-i-Octyl-, N-n-Nonyl-, N-n-Decylimidazol oder Gemische aus diesen. Bevorzugt ist N-Methylimidazol. Man verwendet diese Katalysatoren in wirksamen Mengen, die im allgemeinen zwischen 0,1 und 100, vorzugsweise zwischen 1 und 50 und insbesondere zwischen 2 und 20 Gew.-% der Carbonsäureanhydridmenge liegt.

Als Carbonsäureanhydride eignen sich solche, die von Alkan-, Alken- und/oder Arylcarbonsäuren mit 2 bis 12 C-Atomen gebildet werden, z.B. Essigsäure-, Propionsäure-, Valeriansäure-, Bernsteinsäure-, Acrylsäure-, Methacrylsäure-, Maleinsäure-, Fumarsäure-, Crotonsäure-, Benzoesäure-, Phthalsäure- oder Zimtsäureanhydrid. Es kommen aber auch gemischte Anhydride wie Acrylsäure-methacrylsäureanhydrid in Frage. Bevorzugt sind Acrylsäure- und Methacrylsäureanhydrid, von denen letzteres besonders bevorzugt ist. Man verwendet diese Carbonsäureanhydride in einer Menge, die im allgemeinen zwischen 10 und 100, vorzugsweise zwischen 12 und 90 und insbesondere zwischen 15 und 60 Gew.-% der Polyvinylalkoholmenge liegt.

Hydroxygruppenhaltige Polymerisate, die nach dem erfindungsgemäßen Verfahren verestert werden können, sind sämtliche durch Polymerisation olefinisch ungesättigter Monomerer gebildeten Polymerisate, die freie Hydroxylgruppen enthalten oder in die nachträglich solche Gruppen durch polymeranaloge Umsetzungen eingeführt worden sind. Vorteilhaft sind die in Wasser löslichen oder dispergierbaren Polyvinylalkohole, welche wiederkehrende 1-Hydroxy-ethyliden-1,2-Einheiten

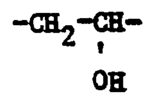

in der Kette enthalten und zahlenmittlere Molgewichte $\bar{M}_n$ von 15 000 bis 100 000, insbesondere von 15 000 bis 50 000 aufweisen, z.B. partiell oder vollständig hydrolysierte Polyvinylalkoholalkylester, insbesondere Polyvinylacetat und Polyvinylpropionat, mit einem Hydrolysegrad von 75 bis 100, vorzugsweise von 80 bis 95 Mol% oder partiell oder vollständig hydrolysierte Alkylenoxid-Vinylalkoholalkylester-Pfropfcopolymerisate, insbesondere solche, die durch Propfen von Vinylacetat oder -propionat auf Polyethylenoxid und anschließende Hydrolyse erhalten werden und aus – jeweils bezogen auf das Copolymerisat –

10 bis 30 Gew.-% an 1-Oxapropyliden-1,3-, $-O-CH_2-CH_2-$,

0 bis 30 Gew.-% an 1-Acetyl-ethyliden-1,2-

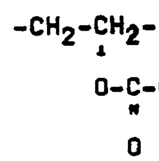

und 90 bis 40 Gew.-% an 1-Hydroxy-ethyliden-1,2-Einheiten

$$-CH_2-\underset{OH}{\underset{|}{CH}}-$$

bestehen. Solche Polymerisate sind allgemein bekannt. Sie können bei dem erfindungsgemäßen Verfahren einzeln oder als Gemisch aus zwei und mehr Polymerisaten angewendet werden.

Methodisch bietet das erfindungsgemäße Verfahren keine Besonderheiten, d.h. man dispergiert den Polyvinylalkohol in einer aprotischen Flüssigkeit mit dem Carbonsäureanhydrid und dem Imidazol I und erwärmt danach das Reaktionsgemisch für einige Stunden – etwa 2 bis 20 h – auf 40 bis 100°C. Nach erfolgter (Teil-)Veresterung filtriert man das polymeranalog veresterte Produkt ab und wäscht und trocknet es wie üblich.

Geeignete aprotische Flüssigkeiten sind z.B. niedere halogenierte Kohlenwasserstoffe wie Methylenchlorid, Chloroform, Tetrachlorkohlenstoff oder Trichlorethan; niedere aliphatische Ketone wie Aceton, Methylethylketon oder Methylisobutylketon; aliphatische, cycloaliphatische oder aromatische Kohlenwasserstoffe wie Hexan, Cyclohexan oder Benzinfraktion; oder Gemische aus zwei und mehr dieser Flüssigkeiten.

Die Mitverwendung eines Dispergierhilfsmittels, z.B. eines Alkylsulfonats wie Natriumtetradecylsulfonat erübrigt sich im allgemeinen. Um im Falle der Veresterung mit Alkensäureanhydriden deren thermisch initiierte Polymerisation zu inhibieren, verwendet man zweckmäßigerweise Inhibitoren wie 2,6-Di-tert.-butyl-p-kresol mit.

Die nach dem erfindungsgemäßen Verfahren hergestellten Carbonsäureester hydroxygruppenhaltiger Polymerisate, insbesondere die Alkensäureester von Polyvinylalkoholen sind weitgehend frei von Verunreinigungen und weniger stark gefärbt als die nach dem bekannten Verfahren hergestellten. Dies gilt auch für Produkte hohen Veresterungsgrades. Diese Produkte sind daher hervorragend für die Herstellung von durch Photopolymerisation vernetzbaren Materialien wie Druckformen und Photoresistmaterialien geeignet. Deren Herstellung erfolgt in üblicher Weise durch Hinzufügen von üblichen Photoinitiatoren sowie gegebenenfalls von photopolymerisierbaren Monomeren, Inhibitoren der thermisch initiierten Polymerisation und von weiteren Hilfs- und/oder Zusatzstoffen zu den aus dem erfindungsgemäßen Verfahren erhaltenen Produkten. Die Herstellung von Druckformen und Photoresists aus diesen durch Photopolymerisation vernetzbaren Materialien erfolgt wie üblich durch Belichten mit aktinischem Licht und Auswaschen der unbelichteten Anteile mit einem Entwicklerlösungsmittel.

In den folgenden Beispielen wurde der Grad der Verfärbung der Reaktionsprodukte durch Messung der Extinktion ihrer 10%igen Lösungen in Wasser/n-Propanol (Volumenverhältnis 2:1) bei einer Wellenlänge von $\lambda$ = 335 nm ermittelt; von Vorteil ist eine Extinktion von weniger als 0,5 $cm^{-1}$. Auf das Vorliegen oder die Abwesenheit von Nebenprodukten wurde aus den Infrarotspektren der Produkte geschlossen: Im Falle der Veresterung mit Alkensäuren ist das Auftauchen bzw. das Ausbleiben einer Schulter (Wellenzahl $\gamma$ = 1645 $cm^{-1}$) auf der Absorptionsbande der Kohlenstoff-Kohlenstoff-Doppelbindung (Wellenzahl $\gamma$ = 1625 $cm^{-1}$) ein Indiz für An- bzw. Abwesenheit von Nebenprodukten.

Beispiel 1

1000 kg eines partiell hydrolysierten Polyvinylacetats (Verseifungsgrad 82 Mol%), wurden in einer Mischung aus 1800 kg Toluol, 165 kg Methacrylsäureanhydrid (enthaltend 3,5% Methacrylsäure als Verunreinigung), 10 kg 2,6-Di-tert.-butyl-p-kresol und 5 kg N-Methylimidazol dispergiert, während 8 Stunden bei 90°C gerührt und das entstandene Reaktionsprodukt abfiltriert, mit Toluol und Aceton gewaschen und getrocknet. Es enthielt 5,5 Gew.-% an Methacrylatgruppen. Es war frei von Nebenprodukten und praktisch farblos (Extinktion: 0,325 $cm^{-1}$).

Beispiel 2

Es wurde wie in Beispiel 1 verfahren, nur daß anstelle von 5 kg 10 kg N-Methylimidazol verwendet wurde. Das entstandene Reaktionsprodukt enthielt 6,2 Gew.-% an Methacrylatgruppen. Es war frei von Nebenprodukten und praktisch farblos (Extinktion: 0,285 $cm^{-1}$).

Beispiel 3

Es wurde wie in Beispiel 1 verfahren, nur daß anstelle des partiell hydrolysierten Polyvinylacetats ein partiell hydrolysiertes Ethylenoxid-Vinylacetat-Pfropfcopolymerisat eines zahlenmittleren Molgewichts $\bar{M}_n$ von 20 000, bestehend aus, bezogen auf das Pfropfcopolymerisat, 25 Gew.-% 1-Oxapropyliden-1,3-, 25 Gew.-% 1-Acetyl-ethyliden-1,2- und 50% 1-Hydroxy-ethyliden-1,2-Einheiten, verwendet wurde. Das entstandene Reaktionsprodukt enthielt 6,1 Gew.-% an Methacrylatgruppen. Es war frei von Nebenprodukten.

Beispiel 4

Es wurde wie in Beispiel 3 verfahren, nur daß anstelle von 5 kg 10 kg N-Methylimidazol angewendet wurde. Das entstandene Reaktionsprodukt enthielt 6,5 Gew.-% an Methacrylatgruppen. Es war frei von Nebenprodukten.

Beispiel 5

Es wurde analog Beispiel 3 verfahren, nur daß 1000 g eines partiell hydrolysierten Ethylenoxid-Vinylacetat-Pfropfcopolymerisats eines zahlenmittleren Molgewichts $\bar{M}_n$ von 18 000, bestehend aus, bezogen auf das Copolymerisat, 25 Gew.-% 1-Oxapropyliden-1,3-, 2 Gew.-% 1-Acetyl-ethyliden-1,2- und 73 Gew.-% 1-Hydroxyethyliden-1,2-Einheiten, 540 g Methacrylsäureanhydrid, 30 g N-Methylimidazol und 20 g 2,6-Di-tert.-butyl-p-kresol verwendet wurden. Das entstandene Reaktionsprodukt

enthielt 14 Gew.-% an Methacrylatgruppen und war frei von Nebenprodukten.

<u>Beispiel 6</u>

Es wurde wie in Beispiel 5 verfahren, nur daß das Pfropfcopolymerisat gemäß Beispiel 3 verwendet wurde. Das entstandene Reaktionsprodukt enthielt 20,4 Gew.-% an Methacrylatgruppen und war frei von Nebenprodukten.

**Patentansprüche**

1. Verfahren zur Herstellung von Carbonsäureestern hydroxygruppenhaltiger Polymerisate durch Umsetzung von feinteilig dispergierten hydroxygruppenhaltigen Polymerisaten mit Carbonsäureanhydriden in heterogener Phase in Gegenwart eines tertiären Amins als Katalysator, dadurch gekennzeichnet, daß man hierzu ein Imidazol der Formel (I),

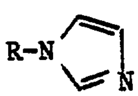

(I)

in der R einen Alkylrest mit 1 bis 10 C-Atomen bedeutet, als Katalysator verwendet.

2. Verwendung der Carbonsäureester gemäß Anspruch 1 für die Herstellung von photopolymerisierbaren Materialien.

3. Photopolymerisierbare Materialien, enthaltend Carbonsäureester gemäß Anspruch 1.

4. Photopolymerisierte Materialien auf der Grundlage von Carbonsäureestern gemäß Anspruch 1.

**Claims**

1. A process for the preparation of a carboxylate of a hydroxyl-containing polymer by reacting a finely dispersed hydroxyl-containing polymer with a carboxylic anhydride in the heterogeneous phase in the presence of a tertiary amine as a catalyst, wherein an imidazole of the formula (I)

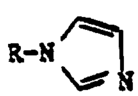

(I)

where R is alkyl of 1 to 10 carbon atoms, is used as the catalyst.

2. Use of a carboxylate as claimed in claim 1 for the production of a photopolymerizable material.

3. A photopolymerizable material containing a corboxylate as claimed in claim 1.

4. A photopolymerized material based on a carboxylate as claimed in claim 1.

**Revendications**

1. Procédé de préparation d'esters carboxyliques de polymérisats à groupes hydroxy par réaction de polymérisats à groupes hydroxy finement dispersés avec des anhydrides carboxyliques en phase hétérogène, en présence d'une amine tertiaire comme catalyseur, caractérisé par le fait que l'on utilise, à cet effet, comme catalyseur, un imidazole de la formule (I)

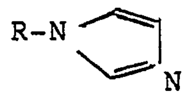

(I)

dans laquelle R représente un reste alkyle ayant 1 à 10 atomes C.

2. Utilisation d'ester carboxylique selon la revendication 1 pour la fabrication de matériaux photopolymérisables.

3. Matériaux photopolymérisables, contenant de l'ester carboxylique selon la revendication 1.

4. Matériaux photopolymérisables à base d'esters carboxyliques selon la revendication 1.